# EUROPEAN PATENT APPLICATION

(11) **EP 1 441 285 A2**
(43) Date of publication of application: **28.07.2004**
(21) Application number: 03292188.4
(22) Date of filing: 05.09.2003
(51) Int. Cl.: G06F 9/44

(54) **Image files constructing tools for cluster configuration**

(30) Priority: 30.09.2002 FR 0212075
(71) Applicant: SUN MICROSYSTEMS, INC., Palo Alto, California 94303 (US)
(72) Inventor: Monaton, Gabriel, 38180 Seyssins (FR); Cerba, Jacques, 38250 Saint Nizier (FR); Armand, François, 78590 Noisy-le-Roi (FR)
(74) Representative: Plaçais, Jean-Yves

(57) **Abstract**

The invention concerns a software code, adapted to manage a configuration of at least a group of nodes. Said software code comprises :
- input code, capable of receiving a set of model configuration files, adapted to create and configure at least partially a data model, said data model defining hardware entities and logical entities for a group of nodes,
- generator code, capable of generating first node data in cooperation with the data model as at least partially configured,
- install code, capable of installing a specific environment in a machine having at least partially the configuration of the nodes of the group, in order to create an archive object using first node data,
- configuration code, enabling a user to complete the configuration of the data model dynamically and generate second node data, and
- further install code, capable of installing a specific environment in a group of nodes, in order to create a deployable object from the archive object and the second node data, and in order to configure nodes of the group of nodes in deploying said deployable object.

## Description

The invention relates to a distributed computer system comprising computers or other hardware entities called nodes.

It exists tools to configure a computer individually in order for it to run for example a server similar to a server of another computer. Such tools comprises capture tools and deployment tools. Capture tools enable a administrator to capture in archives the operating system environment, the applications stack and the system configuration from a server. Deployment tools use the content of these archives for the installation of a server (clone) on a single computer.

However, such tools do not provide efficiency for the configuration of computers in a distributed computer system.

A general aim of the present invention is to provide advances in this matter.

The invention concerns a software code, adapted to manage a configuration of at least a group of nodes, said software code comprising:
- input code, capable of receiving a set of model configuration files, adapted to create and configure at least partially a data model, said data model defining hardware entities and logical entities for a group of nodes,
- generator code, capable of generating first node data in cooperation with the data model as at least partially configured,
- install code, capable of installing a specific environment in a machine having at least partially the configuration of the nodes of the group, in order to create an archive object using first node data,
- configuration code, enabling a user to complete the configuration of the data model dynamically and generate second node data, and
- further install code, capable of installing a specific environment in a group of nodes, in order to create a deployable object from the archive object and the second node data, and in order to configure nodes of the group of nodes in deploying said deployable object.

The invention also concerns a method of managing a configuration of at least a group of nodes comprising the following steps :
a- receiving as input a set of model configuration files and configuring at least partially a data model, said data model defining some hardware entities and some logical entities for a group of nodes,
b- generating first node data in cooperation with the data model at least partially configured,
c- installing a specific environment in a machine having at least partially the configuration of the nodes of the group in order to create an archive object using first node data,
d- completing the configuration of the data model dynamically and generating second node data,
e- installing a specific environment in a group of nodes in order to create a deployable object from the archive object and the second node data, and in order to configure nodes of the nodes group in deploying said deployable object.

The invention also concerns a software product for performing the hereinabove method.

Other alternative features and advantages of the invention will appear in the detailed description below and in the appended drawings, in which :
- figure 1 represents a distributed computer system comprising two nodes;
- figure 2 represents a group of nodes forming a cluster;
- figure 3 is a partial illustration of the machines having the software management and configuration tools used for the invention;
- figure 4 is a complete illustration of a build environment and of a deployment environment according to the invention;
- figure 5 is a functional diagram representing the input of the software management and configuration tools in the invention;
- figure 6 is a functional diagram representing the output of the software management and configuration tools in the invention;
- figure 7 represents a flow chart of a generic flash archive creation process according to the invention;
- figure 8 represents a flow chart of a configured flash archive creation process according to the invention;
- figure 9 represents a flow chart of a flash archive deployment process according to the invention,
- figure 10 represents a data model used by the software management and configuration tools.

The drawings form an integral part of the description embodiments of the present invention.

This invention also encompasses embodiments in software code, especially when made available on any appropriate computer-readable medium. The expression "computer-readable medium" includes a storage medium such as magnetic or optic, as well as a transmission medium such as a digital or analog signal.

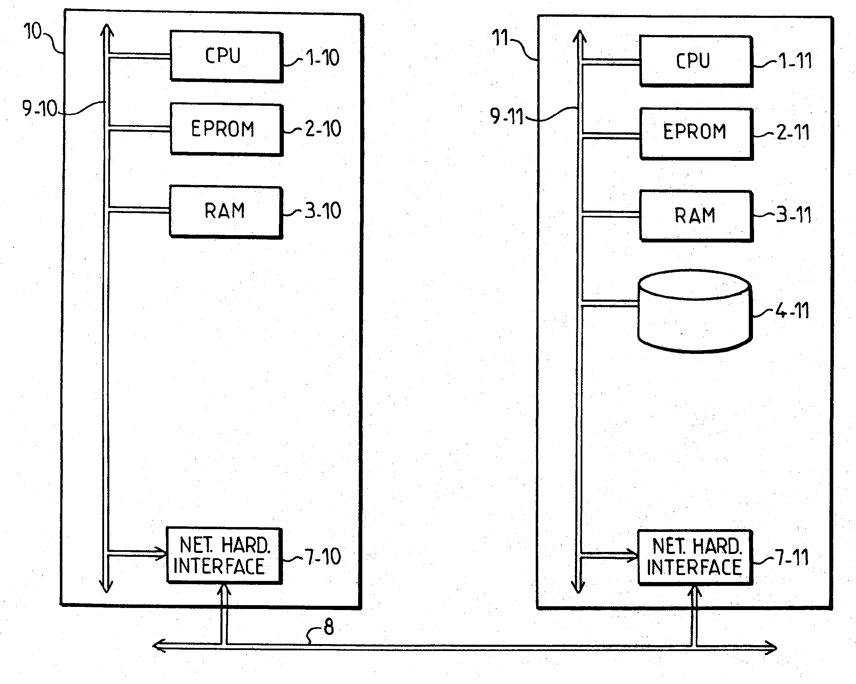

This invention may be implemented in a network comprising computer systems. The hardware of such computer systems is for example as shown in Fig. 1, where in the computer system 10:
- 1-10 is a processor, e.g. an Ultra-Sparc (SPARC is a Trademark of SPARC International Inc);
- 2-10 is a program memory, e.g. an EPROM for BIOS;
- 3-10 is a working memory for software, data and the like, e.g. a RAM of any suitable technology (SDRAM for example); and
- 7-10 is a network interface device connected to a communication medium 8, itself in communication with other computers such as computer system 11. Network interface device 7-10 may be an Ethernet device, a serial line device, or an ATM device, inter alia. Medium 8 may be based on wire cables, fiber optics, or radio-communications, for example.

The computer system 10 may be a node amongst a group of nodes in a distributed computer system. The other node 11 shown in figure 1 comprises the same components as node 10, the components being designated with the suffix 11. The node 11 further comprises a mass memory 4-11, e.g. one or more hard disks. The nodes having hard disk are designated as diskfull and other nodes having no hard disk are designated as diskless.

Thus, node 10 is considered as a diskless node and node 11 is considered as a diskfull node.

Data may be exchanged between the components of Figure 1 through a bus system 9-10, respectively 9-11, schematically shown as a single bus for simplification of the drawing. As is known, bus systems may often include a processor bus, e.g. of the PCI type, connected via appropriate bridges to e.g. an ISA bus and/or an SCSI bus.

Figure 1 depicts two connected nodes.

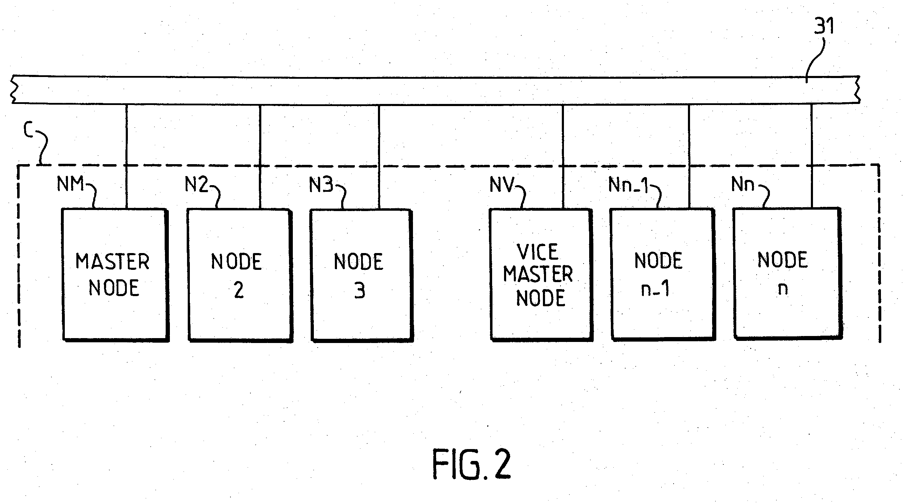

Figure 2 shows an example of groups of nodes arranged as a cluster C. The cluster may have a group of master eligible nodes and optionally at least a group of non master eligible nodes. By way of example only, the cluster comprises a group of master eligible nodes having a master node NM adapted to manage the nodes of the cluster and, for reliability reasons, a vice-master node NV, and a group of non master eligible nodes comprising the other nodes N2, N3 ... Nn-1 and Nn. Each node is connected to the network 31 which may be redundant. The network 31 is adapted to link nodes of a cluster between them. These interconnections between nodes of a cluster may be done using a switch. The qualification as master or as vice-master should be viewed as dynamic: one of the nodes acts as the master (resp. Vice-master) at a given time. However, for being eligible as a master or vice-master, a node needs to have the required "master" functionalities. A node being diskfull is considered to have at least partially these master functionalities. When informed about the master node failure, the vice-master node may replace the failed master node and becomes the master node.

### Several definitions may be useful to understand the following description :

As seen, a *node* is a logical entity which may involve:
. a main cPCI board (e.g. CP2060, CP1500, ...) or a Netra machine (e.g. Netra 20)
. Ethernet NICs
. optionally disk(s)
. optionally PMC (PCI Mezzanine Cards, as e.g. co-processor)
. optionally Input /Output front and/or rear cards.
In a cluster, a node may be elected as the master node of the cluster and thus managing the other nodes. In a cluster, there may be one or more master eligible node (s) in the group of master eligible nodes.

*A diskless node* is a node without storage capabilities. Diskless nodes are always non master eligible nodes. This kind of node runs/uses an Operating System, data and software exported by the master node of the cluster.

*A diskfull node* is a node which has storage capabilities. Diskfull nodes can be Master Eligible or Non Master Eligible.

*A dataless node* is a Non Master Eligible diskfull node. This kind of node shares data and software exported by the master node of the cluster. Contrary to a diskless node, this kind of node uses an Operating system stored on a local disk, boots locally and has local storage capabilities.

*A nodes group* defines a set of nodes which share the role (Master Eligible or Non Master Eligible), the Operating System, the Architecture (e.g. SPARC) ,the class, the software, the foundation services configuration and the peripherals capabilities (e.g. same disk capabilities, same i/o cards capabilities). Furthermore every nodes of a Master Eligible node group may have the same disk(s) layout(s), the same file systems definitions. The master eligible nodes group (one per cluster) embeds diskless nodes groups environments, if some are defined.

*Flash archives* are a set of data created with Flash tools which are further described in the following documentation: Solaris 9 Installation Guide. (ref 806-5205-10) and comprising as known for example the system image of each node of a cluster, also called cluster image. This system image is a sort of image file (called archive file) which may comprise operating system files, cluster configuration files, user application software and data. When installed on a target machine (e.g. in epROM or flash memory), the image file is capable (after suitable initialization, like re-booting) to have it operate consistently in the desired hardware and software configuration. This system image may be replicated (or deployed) on multiple cluster. The flash archive is deployed using replication tools such as the Jumpstart (trade mark) scripts of Sun microsystem for example further described in the hereinabove cited documentation: Solaris 9 Installation Guide.

There may be three types of flash archives:
- *Generic Flash archive:* this archive cannot be deployed. It is a cluster-independent flash archive. It can be used as basis to generate deployable Flash archive for a set of clusters sharing the topology defined in the cluster image.
- *Configured Flash archive:* generic Flash archives which embeds user application data and scripts to be installed on the cluster nodes at deployment time.
- *Deployable Flash archive:* generic or configured Flash archive adapted to a specific cluster (or a specific site).

*A Software Load* (SWL) is a collection of deployable objects (i.e. Flash archives dedicated for a specific cluster).

The *Software Management and Configuration Tools* according to the invention is a Sun product comprising software tools adapted to configure, build and deploy the software Load (SWL) on a cluster.

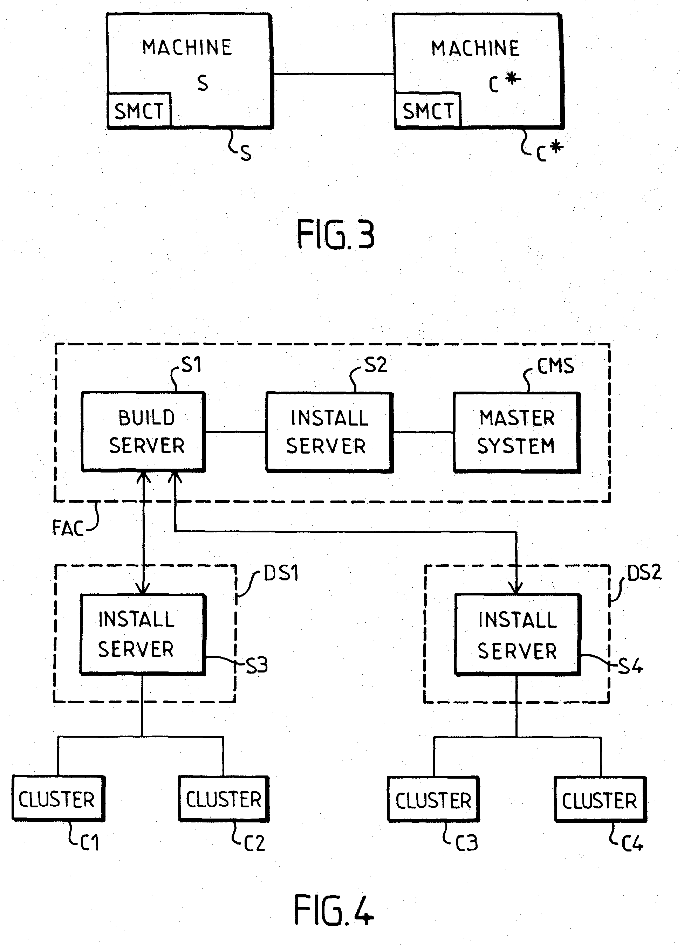

Figure 3 represent a single machine S on which is installed and is running the Software Management and Configuration Tools of the invention. As illustrated, machine S is linked to a machine which represents either a machine C* called a master system at flash archive creation time (more precisely at software load creation time), either a group of running nodes (e.g. a cluster) at flash archive deployment time (more precisely at software load deployment time). The master system (also called a prototype machine) is a machine equivalent to a master eligible node(s) or to a dataless node(s) and from which the Flash archives (and the software load) are built. The master system is a machine comprising the same architecture (e.g. SPARC) and the same disk configuration than the nodes of the group of nodes in the cluster on which the flash archive (more precisely the software load) is to be deployed.

Figure 4 represents another embodiment of installation of the Software Management and Configuration Tools. The Software Management and Configuration tools are installed partially on a build server S1 and on an install server S2 linked to the master system CMS for flash archive creation and on several install server S3, S4 for example linked to cluster C1, C2, C3, C4 for flash archive deployment. S1, S2, CMS define the flash archive creation environment (FAC) and each install server S3, S4 defines a flash archive deployment site.

A build server may be a machine, e.g. a standard Solaris server, comprising tools to manage software data to create the flash archive and then the software load, e.g. in preparing these software data. User application data and scripts may also be prepared by the build server in order to be added to flash archives. This build server may work in relation with an install server. An install server is a machine used as host for the environments and comprising tools to install a specific environment on a master system and on a cluster nodes. Such a server is used, after such specific environment installation and gathering of software data by the build server, to create the generic flash archives and the software load or to deploy them on the nodes of a nodes group. Configured flash archives may also be created by the install server if user configuration data and scripts are added to the generic flash archives. The software loads may all be in a central repository.

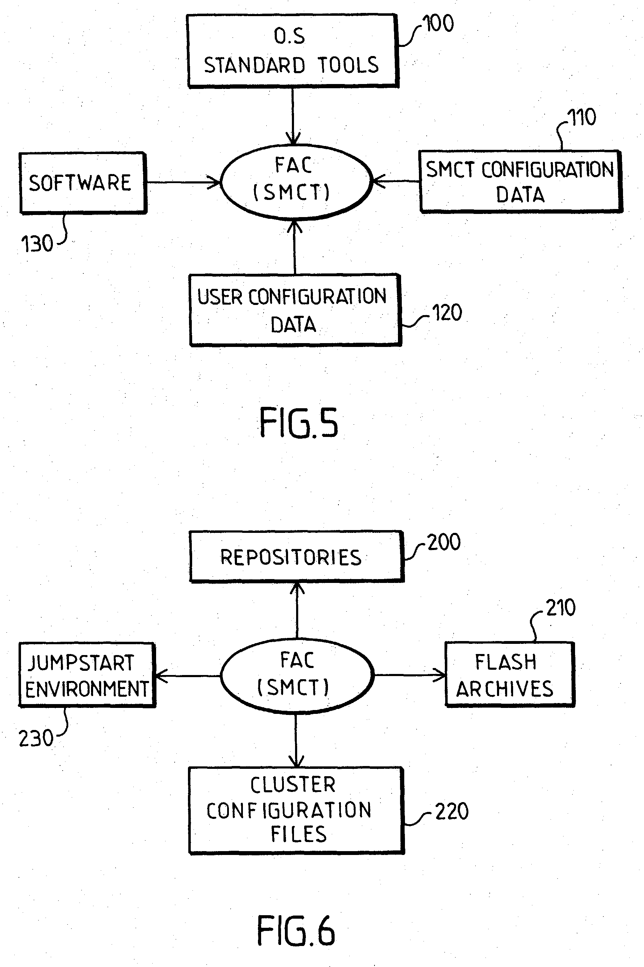

Figure 5 describes the inputs used by the Software Management and Configuration Tools. Other inputs may be used according to the invention. References to Solaris and Sun products are only examples.

The operating system standard Sun Microsystems tools 100 comprise the Jumpstart tools and the flash tools. The Software Management and Configuration Tools use Jumpstart tools for the, installation of a specific environment on
- the master systems using software data for the flash archive creation and on
- the cluster nodes for the deployment and the installation of the flash archives.
The Software Management and Configuration Tools use the Flash tools to create the Flash archives.

The Software code may comprise different software 130 from different products and user applications, e.g. Sun products. These software may comprise several packages and patches, e.g. from Solaris add-on products. For example, some packages and patches come from the Solaris distribution used by Jumpstart.

The configuration data 110 used by the software management and configuration tools may comprise cluster data, machine data, network data, jumpstart data and nodes group data such as software data and configuration data.

The User configuration data 120 comprise application configuration data defined by any user and the scripts able to install them on the cluster.

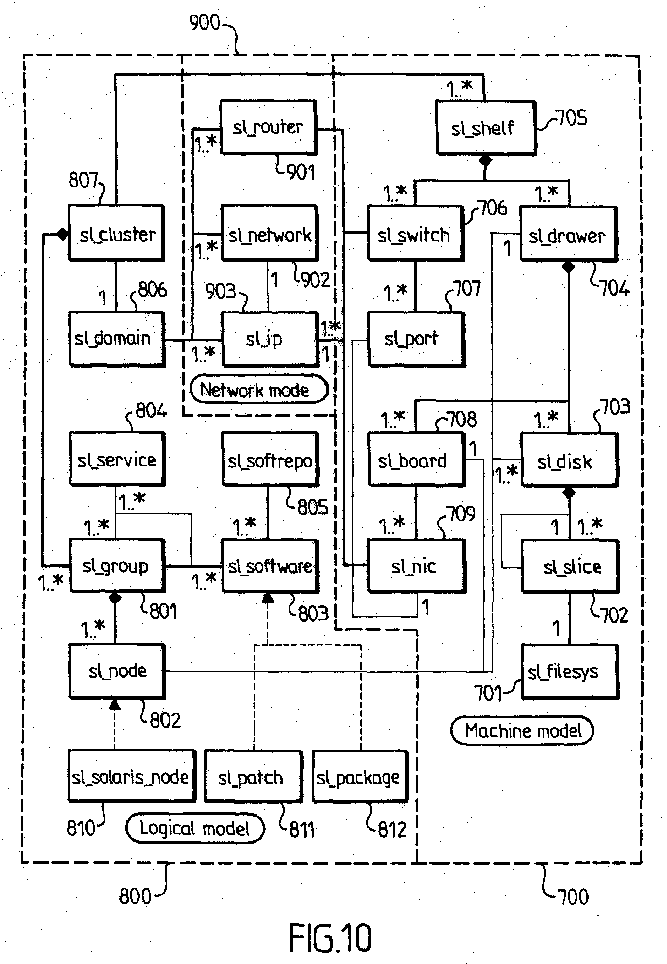

All these inputs 100,110,120 and 130 are organized according to a classes diagram created and configured as described in reference to figure 10.

Such a classes diagram (called a data model) is adapted to define a cluster model 800, a machine model 700 and a network model 900. Links between classes in figure 10 represent the relationships between classes : thick lines represents containments, fine lines represent references, dotted lines represent inheritances.

The machine model 700 describes all the hardware elements of the cluster and their connections. The cluster topology is thus defined. In this model, the machine is seen as a hierarchical collection of hardware elements. The outer part of the machine is the shelf (or chassis), the inner part of the machine are the node peripherals (disk, ethernet interface NIC, ...). The model allows the definitions of several shelves per cluster. Thus, the shelf class 705 contains a switch class 706 and a drawer class 704. The drawer class 704 contains a disk class 703 to define the disk(s) used and to a board class 708 to indicate which board is used. The disk class 703 contains the slice class 702 itself containing the file system class 701 to define the file system of a disk slice. The board class contains the ethernet interface class (nic class) 709 to define possible multiple ethernet interfaces for a board. To define topology of a cluster, the ethernet interface class 709 is linked to the switch class 706 indicating that a ethernet interface is linked to a defined switch and more precisely to a defined port of a switch. Indeed, the switch class 706 contains the port class 707. A reference link exists between the port class and the ethernet interface class.

A cluster model 800 describes the cluster nodes and nodes group. It is the logical view of the cluster. It comprises different classes hereinafter described.

The cluster class 807 contains the nodes group class 801. This nodes group class 801 itself contains the nodes class 802. The nodes class inherits an operating system class 810, which may contains e.g. Solaris or any other operating systems for a node. Each node group is referred to a software class 803 which defines the software installed for each node of a nodes group. This software class 803 inherits the correction class 811 defining e.g. a patch enabling modification of files in a software distribution for a node group and the installation unit class 812 defining eg. the package for Solaris environment being a software distribution. User defined software distribution, patches and packages may be defined optionally in these classes. Software distribution, patches and packages may also be defined for other environment than Solaris in these classes.

Each nodes group of the nodes group class 801 is also referred to a configuration class (not shown) itself referred to a file class. The configuration class defines user configuration data associated to a nodes group. The file class defines any data file or install scripts of user configuration data associated to a nodes group.

Moreover the software class 803 contains a software repository class 805. This class 805 may be used to store the software to be integrated in a flash archive and to define which software of the software repository is adapted to produce a given flash archive for a given nodes group. For the configuration class not shown, a softwareload repository class (not shown) may comprise the flash archives themselves once created. This last class and class 805 provides a tool for reproducibility of flash archives as described hereinafter.

The node group class 801 is referred to the service class 804. This class 804 is adapted to provide pre-configurated services, e.g. for the management of a cluster or for the constitution of a cluster (Cluster monitor membership).

The cluster class 807 further contains the domain class 806. Each cluster comprises a domain number.

The network model 900 is adapted to configure the IP addressing schema of the network. The network model 900 comprises different classes defining the network. These different classes are linked on one hand to the domain class 806 and on the other hand to the switch class 706 and the ethernet interface class 709. These different classes comprise the IP address class 903, the network class 902 and the router class 901.

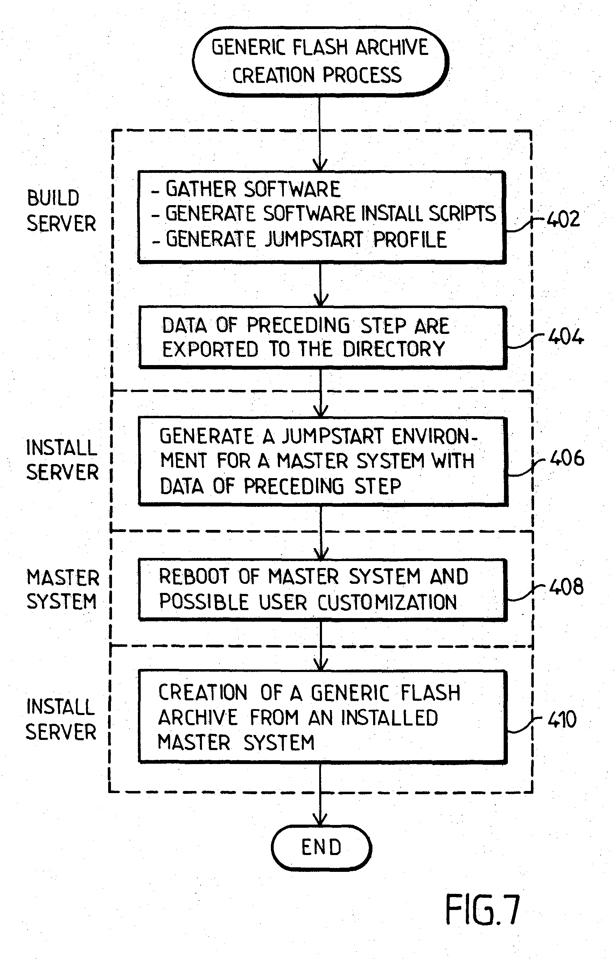

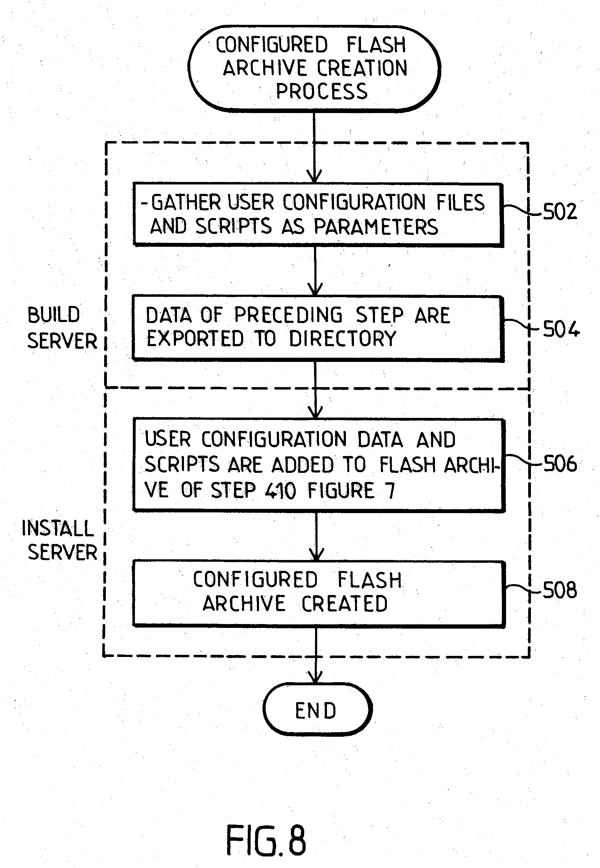

Each of the three models 700, 800, 900 is configured by a configuration file, e.g. a cluster configuration file for the model 800, a machine configuration file for the model 700 and a network configuration file for the model 900. Each configuration file may be fully defined or partially defined according to the process of figures 7, 8 or 9 used as hereinafter seen.

Some input data may be added or specified in an incremental way, i.e. configuration files for these models may be added as input data at flash archive creation or at deployment process as described in figures 7, 8, 9. In other words, some input data may be added dynamically according to the process used.

Figure 7 represents the generic flash archive creation process according to the invention and managed by the software management and configuration tools.

The process of flash archive creation is based on a set of configuration files taken as input by the software management and configuration tools. These configuration files comprise
- a cluster configuration files comprising a cluster definition defining the cluster nodes, the cluster domain, the nodes group and the foundation services associated to each nodes group; this file configures the cluster model of figure 10,
- a machine configuration file defining the machine (or computers) running the cluster; this file configures partially the machine model of figure 10 (e.g. with file system definitions).

Further configuration files are used ;
- nodes group configuration files comprising software configuration files for foundation services (i.e. packages and patches) which rely on predefined configuration files and, optionally, for user defined software,
- jumpstart configuration file defining a jumpstart profile for each diskfull node. It defines the operating system standard tools (or packages for Solaris) to install on such nodes.

In a first operation 402, the build server is adapted, from the input configuration files and for each nodes group, to gather the software, to generate software install scripts, to generate Jumpstart profile for master eligible and dataless nodes groups only. Operation 402 also generate a software load descriptor. Once operation 402 has succeeded, operation 404 takes the node data generated by operation 402 and copy them into a directory.

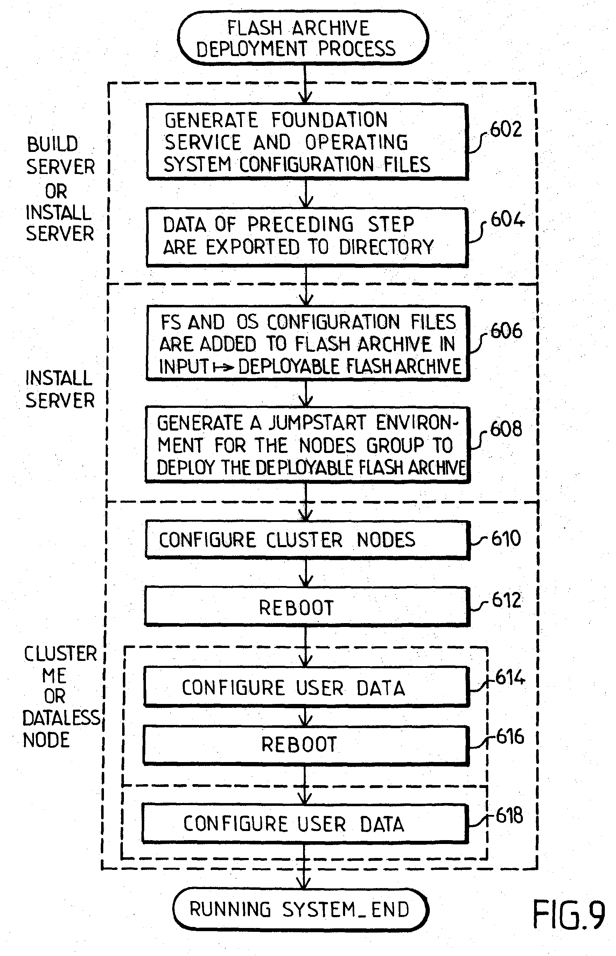

At operation 406, the install server is adapted to generate a Jumpstart installation environment for a master system from the data in the directory generated by operation 404. This operation is run once per group, each nodes group is processed individually; in other words, each master system has the software data of the nodes group targeted. Once the Jumpstart installation is finished, the master system reboots and the user may perform any customization at operation 408. At operation 410, the install server generates a generic Flash archive from the installed master system. The generic Flash archive created may comprise two sections:
- one binary section which corresponds to the system image, i.e. being the 'archive files' section of the Flash archive;
- one ascii section which holds the signature of the software load descriptor generated at operation 402. This signature enables to identify the flash archives in order to perform consistency checks in the next steps of figure 8 and 9, to describe the content of the flash archive and to interrogate and/or display the content of the flash archives.
The software load may be created at this time.

The generic flash archive creation ends. Though the operations are processed, as indicated in figure 7, in the different servers (build server and install server), they may be processed in a single server having the software management and configuration tools.

Figure 8 illustrates an optional process of the invention : the configured flash archive creation process. The Flash archive configuration consists in adding or replacing configuration data sections to an existing Flash archive. This configured flash archive creation is based on the following inputs taken by the software management and configuration tools:
- a flash archive (generic according to the process of figure 7 or already configured according to the process of figure 8) stored in the central repository,
- user data given as a set of files called user defined configuration data, these data being added in the configuration class of the cluster model,
- installation scripts for these user data, these scripts being added in the file class of the cluster model.

The control of the order of scripts execution and the configuration of data and scripts are allowed by user defined configuration files.

At operation 502, the build server is adapted to gather user defined configuration data, e.g. a set of files, and user defined configuration data installation scripts given as parameters. These scripts and data are configured at deployment time as seen in figure 9. These scripts are aimed at installing the user data at deployment time. In an embodiment, all the nodes groups are processed in one operation. Once operation 504 has succeeded, the data generated by this operation 504 are copied into a directory. The data generated by operation 402 are also exported as they are in the directory. Operation 506 generates ascii sections from the User defined data. A single section may include all the nodes group configuration data and scripts. If a Flash archive is given as input, e.g. a generic flash archive from step 410 figure 7 or a already configured flash archive, the configuration sections are replaced by the new ones. This operation 506 runs once per nodes group, i.e. each nodes group is processed individually.

Configured flash archives are thus created at operation 508. The creation process ends. The configured flash archives may be stored in the central repository for reproducibility of deployment process of figure 9.

All these data inputs of operation 502 are optional. If none of these data inputs exist, no new sections are created or replaced. The configuration data and scripts are configured at the nodes group level so that the associated flash archives can be configured.

Figure 9 represents the flash archive deployment process according to the invention and managed by the software management and configuration tools. The install server and the build server are linked to the nodes group on which the flash archives are to be deployed. Some data are given in input to perform this process comprise:
- the flash archives coming from the processes of figure 7 or 8, and the configuration data:

- the configuration files, configuring the model of figure 10, being:
   a cluster configuration file being logical cluster definition which defines cluster nodes, nodes groups and foundation service list; the foundation services comprise the different services that a node in a cluster may need (Reliable Boot Service (RBS), Cluster Membership Monitor (CMM) ...),
   a machine configuration file which defines the machine running the cluster,
   a network configuration file which defines the networks parameters needed by the cluster.

Different consistency checks are accomplished in regard with the foundation services to configure. Configuration data may be imported from the flash archive configuration process in input (more specifically from the software repository class) : for a configured flash archive, these configuration data may indicate when to run the user install scripts for applications as described hereinafter.

At operation 602, the build server generates the foundation services configuration files and the operating system configuration files according to the input being e.g. cluster, machine and network configuration files of the data model. The foundation services configuration files are, for example, network configuration files or DHCP configuration files. Operation 602 may be run once per software load, i.e. all the nodes groups are processed in one operation. A consistency check may be done with imported configuration data. Once operation 602 has succeeded, operation 604 exports data from operation 602 and copy them into a directory.

At operation 606, the install server adds sections to the Flash archive given as input. These sections include the exported data of operation 604 copied in the directory. The software load descriptor stored in the software load section as seen in figure 7 is replaced in order to take into account the complete cluster definition. The flash archives are now deployable flash archives. Another consistency check may be done using the archive and the software load data. At operation 608, the install server generates a Jumpstart environment for each node of the nodes group given as parameter, i.e. each nodes group may be processed individually. The install server deploys then the flash archives, e.g. in the form of a software load, in each node of group of nodes.

At operation 610, the nodes of the cluster are configured using the deployed flash archives. Then, if the flash archive defines no user configuration data and scripts, the process continues at operation 612 for a reboot of the nodes of the nodes group, the optional operations 614, 616 and 618 (surrounded with a dotted line) are not processed and then it ends with the run of the cluster. If the flash archive defines user configuration data and scripts, the optional operations may be executed according to the following different cases:
- a second reboot may have been configured and in this case, the foundation services (also called cluster services) are not started yet. The user configuration data are configured at operation 614 and the second reboot starts the foundation services at operation 616. The process may then configure other user configuration data at operation 618 and ends with the run of the cluster or directly ends with the run of the cluster.
- the reboot of operation 612 has started the foundation services and the user configuration data are configured at operation 618. The process may then ends with the run of the cluster.

Configuration data in the configuration class of figure 10 are used to indicate at which operation running the user install scripts.

These double reboot operations is used to configure any kind of nodes group, e.g. master eligible group of nodes or dataless group of nodes of a cluster, using user configuration data.

To take into account cluster dependent data, process of figure 8 may be run again to change the content of the configuration data sections in the flash archives.

The first tools used to prepare the final configuration data may be in the build server or in the install server connected to the cluster. The second tools incorporating the configuration data into the Flash archives and creating the cluster Jumpstart deployment environments may be in the install server. The final configuration data can then be merged into a centralized software load repository. To communicate the software load data between the different environments, import and export operations are used.

Figure 6 recapitulates the different outputs provided by the processes of figures 7; 8, 9.

The flash archives are the main outputs of the software management and configuration tools. The flash archive 210 may be a self-describing deployment object. At least the three type of flash archives per software load are managed by the software management and configuration tools. Repositories 200 such as software repository or software load repository are other outputs and enable to rebuild an identical or similar flash archive with stored data if needed (e.g. if a flash archive is destroyed). Other outputs comprise the master systems jumpstart environment and the cluster nodes jumpstart environment or other environment adapted to provide tools 230 to deploy flash archive. Outputs also comprise cluster configuration files 220 as foundation services configuration files and operating system configuration files.

The invention enable flash archives to be reproducible and configured depending on cluster configuration and/or user defined configuration data. Flash archives are thus generated and deployed using single software tools.

Using the different models (cluster, machine and network models) having repositories, it is possible to execute independently each process of figures 7, 8, 9 by providing consistency checks. The invention further enables a simplification and a standardization of flash archive creation and deployment process for a nodes cluster.

The invention is not limited to the hereinabove features. Other environments may be used.

Some operations may also be used for supplementary configurations. Thus, the double reboot operations of figure 9 may also be used to manage internally the configuration of some services. For example, for a given service if the configuration is done during the cluster configuration and if this service requires e.g. another services missing, the double reboot operations enables to configure the given service on the nodes of the node group.

This invention also covers the software code for performing the method of figure 7, 8 and 9, especially when made available on any appropriate computer-readable medium. The expression "computer-readable medium" includes a storage medium such as magnetic or optic, as well as a transmission medium such as a digital or analog signal. The software code basically includes separately or together, the codes defining the build server, the install server and the master system.

## Claims

1. A software code, adapted to manage a configuration of at least a group of nodes, said software code comprising:
- input code, capable of receiving a set of model configuration files, adapted to create and configure at least partially a data model, said data model defining hardware entities and logical entities for a group of nodes,
- generator code, capable of generating first node data in cooperation with the data model as at least partially configured,
- install code, capable of installing a specific environment in a machine having at least partially the configuration of the nodes of the group, in order to create an archive object using first node data,
- configuration code, enabling a user to complete the configuration of the data model dynamically and generate second node data, and
- further install code, capable of installing a specific environment in a group of nodes, in order to create a deployable object from the archive object and the second node data, and in order to configure nodes of the group of nodes in deploying said deployable object.

2. The software code of claim 1, wherein the first node data and/or second node data are stored in a repository enabling the re-creation of an archive object and/or a deployable object, as required.

3. The software code of claim 2, wherein the first node data comprise software data and a software install script for a group of nodes.

4. The software code of claim 2, wherein the second node data comprise operating system files and service configuration files for a group of nodes.

5. The software code of claim 4, wherein the install code is further adapted to create a configured archive object in adding user defined configuration data and user install scripts to an archive object.

6. The software code of claim 5, wherein the install code is further adapted to create a new configured archive object in adding new user defined configuration data and new user install scripts to an already configured archive object.

7. The software code of claim 5, wherein the further install code is further adapted to configure nodes of the group of nodes, to reboot the nodes, to configure the user defined configuration data and to run the nodes.

8. The software code of claim 5, wherein the further install code is further adapted to configure nodes of the group of nodes, to process to a first reboot the nodes, to configure the user defined configuration data, to process to a second reboot and to run the nodes.

9. The software code of claim 1, wherein the input code is adapted to receive the set of model configuration files, as comprising a logical configuration file for nodes groups and a hardware configuration file, and is further adapted to receive a network configuration file in order to complete the data model.

10. The software code of any of the preceding claims, wherein the data model as at least partially configured comprises a hardware model linked to a logical model for groups of nodes.

11. The software code of any of the preceding claims, wherein the completed data model comprises a hardware model linked to a logical model for groups of nodes and to a network model.

12. The software code of any of the preceding claims, wherein the data model is organized in classes.

13. The software code of any of the preceding claims, wherein the machine is a prototype machine having at least partially the configuration of nodes of a group of node for which an archive object is created.

14. The software code of any of the preceding claims, wherein the deployable object is a deployable flash archive.

15. The software code of any of the preceding claims, wherein the archive object is a flash archive.

16. A method of managing a configuration of at least a group of nodes comprising the following steps :
a- receiving as input a set of model configuration files and configuring at least partially a data model, said data model defining some hardware entities and some logical entities for a group of nodes,
b- generating first node data in cooperation with the data model at least partially configured,
c- installing a specific environment in a machine having at least partially the configuration of the nodes of the group in order to create an archive object using first node data,
d- completing the configuration of the data model dynamically and generating second node data,
e- installing a specific environment in a group of nodes in order to create a deployable object from the archive object and the second node data, and in order to configure nodes of the nodes group in deploying said deployable object.

17. The method of claim 16, wherein the first node data of step b- and/or second node data d- are stored in a repository enabling the recreation of an archive object in step c-and/or a deployable object in step e-, as required.

18. The method of claim 17, wherein the first node data of step b- comprise software data and a software install script for a group of nodes.

19. The method of claim 17, wherein the second node data of step d- comprise operating system files and service configuration files for a group of nodes.

20. The method of claim 16, wherein step c- further comprises creating a configured archive object in adding user defined configuration data and user install scripts to an archive object, said configured archive object being used in step e- to create a deployable object.

21. The method of claim 20, wherein step c- further comprises creating a new configured archive object in adding new user defined configuration data and new user install scripts to an already configured archive object.

22. The method of claim 20, wherein step e- further comprises configuring nodes of the group of nodes, to reboot the nodes, to configure the user defined configuration data and to run the nodes.

23. The method of claim 20, wherein step e- further comprises configuring nodes of the group of nodes, processing to a first reboot the nodes, configuring the user defined configuration data, and processing to a second reboot and to run the nodes.

24. The method of claim 16, wherein step a- comprises receiving the set of model configuration files, as comprising a logical configuration file for nodes groups and a hardware configuration file, and further comprises receiving a network configuration file in order to complete the data model.

25. The method of any one of claims 16 to 24, wherein the data model as at least partially configured of step b- comprises a hardware model linked to a logical model for groups of nodes.

26. The method of any one of claims 16 to 25, wherein the completed data model of step d-comprises a hardware model linked to a logical model for groups of nodes and to a network model.

27. The method of any one of the claims 16 to 26, wherein the data model is organized in classes.

28. The method of any one of claims 16 to 27, wherein the machine of step d- is a prototype machine having at least partially the configuration of nodes ofa group of node for which an archive object is created.

29. The method of any one of claims 16 to 28, wherein the deployable object of step e- is a deployable flash archive.

30. The method of any one of claims 16 to 29, wherein the archive object of step c- is a flash archive.

31. A software product for performing the method as claimed in any of claims 16 to 30.
